# EUROPEAN PATENT APPLICATION

(11) **EP 1 354 738 A1**
(43) Date of publication of application: **22.10.2003**
(21) Application number: 02425705.7
(22) Date of filing: 15.11.2002
(51) Int. Cl.: B60H 3/00, B60H 3/06

(54) **Device to prevent motor vehicles from ambient pollution**

(30) Priority: 17.04.2002 IT RM20020207
(71) Applicant: Erba, Francesco, 00165 Rome (IT)
(72) Inventor: Erba, Francesco, 00165 Rome (IT)

(57) **Abstract**

The purpose of this industrial patent - by Francesco Erba - Via Cardinale Lualdi, 6 - 00165 ROME - ITALY - is to avoid that polluting agents, such as toxic powders and gas, may enter the driver's cabin of motor vehicles and damage their users/passengers.

Gas and small solid particles sensors analyze the air that enters the vehicle.
When a programmed danger threshold is reached the sensors activate - through appropriate electromechanical devices - the air recycling system and block the inlet of external air.

To avoid that too long expositions to polluting agents and consequently too long periods of breathing of the internal air may cause an increase in CO2 percentage and then damages to the passengers, a CO2 absorber is put in the air circuit in order to absorb CO2 produced by passengers' breathing. An O2 sensor is put in the cabin of the motor vehicle to activate the intake of O2 into the vehicle from an external small cylinder in order to maintain the right percentage of O2 in the cabin.

## Description

Everybody knows that all over the world, in small as well as big cities, the problem of air pollution is becoming more and more important.

Local governments are trying to reduce the problem but even in the best conditions there are still situations of high levels of pollution in the driver's cabin of motor vehicles due to, for example, the nearness of vehicles in a queue with one vehicle exhausting its gas very next to the air inlet of another one.

Nowadays motor vehicles in general and cars and busses in particular have air conditioning systems which allow to maintain a very good level of temperature and dampness inside them. They also generally have a system to manually start the air recycling in order to avoid the inlet of harmful agents.

The actual ventilation systems for vehicle have the following defects:
1) The starting of the air recycling system is subjective. It means that the driver activates it when he, or others passengers, smells of unpleasant smells. Hardly the circuit is activated when in presence of odourless gas such as carbon monoxide ( CO).
2) While starting the air recycling system, in the driver's cabin the concentration of carbon dioxide ( CO2 ) rises and the one of oxygen lowers proportionally to the time and the number of passengers. The unchecked rise of the concentration of carbon dioxide may cause some troubles such as: difficulty in breathing (especially for those who suffer from asthma or for obese people), headache, nausea, diplopia, euphoria and then somnolence. All these elements may considerably reduce driver's reaction time with potential danger for himself and for other people.

The purpose of this invention is to overcome these defects and avoid that polluting agents, such as toxic powders and gas (principally CO), may enter the driver's cabin of motor vehicles and be dangerous for the users/passengers' health.

The invention consists of three parts:
1) Sensors for CO, CO2, small particles and other polluting agents such as benzene etc. that automatically activate the air recycling system when the prefixed threshold values for the measured agents are reached.
   Besides the CO and CO2 sensors - essential because they refer to a lethal and odourless gas - the choice of the other sensors is left to car producers and it depends on the environment in which the vehicle will be.
2) CO2 absorber (soda lime or other suitable material) placed in the air recycling system intended to absorb carbon dioxide (CO2) produced by passengers.
   As the oxygen consumed by passengers and then transformed into carbon dioxide is absorbed by the CO2 absorber, the concentration level of oxygen in the driver's cabin gets lower even if there is no rise in the carbon dioxide concentration level.
3) O2 sensor placed in the driver's cabin that starts the intake of oxygen (O2) in the cabin when a threshold value is reached.
   The signal coming from this sensor, and processed by the measurement circuit, starts the intake of O2 into the driver's cabin and makes it work until the standard value is achieved.
   The oxygen is provided by a small dimensions bottle through a pressure-reducer and an electro-valve controlled by the O2 measure circuit. The bottle is located in a suitable position into the motor vehicle.

Therefore the system is composed by:
1) Polluting agents sensors located in the inner part of the air vents;
2) Electronic device for the measure of the concentration of polluting agents;
3) Regulator of the threshold for the start up of the air recycling system;
4) CO2 absorber used to absorb carbonic dioxide produced by driver and passengers;
5) Oxygen sensor put in the cabin of the vehicle;
6) Electronic device to measure the concentration level of oxygen in the cabin of the vehicle, to set a threshold value, to control through the electromagnetic valve the intake of oxygen in order to maintain the correct percentage of oxygen in the cabin;
7) Electromagnetic valve;
8) Small dimensions, quick-clutch oxygen bottle;
9) Quick-clutch for an oxygen bottle with pression-reducer.

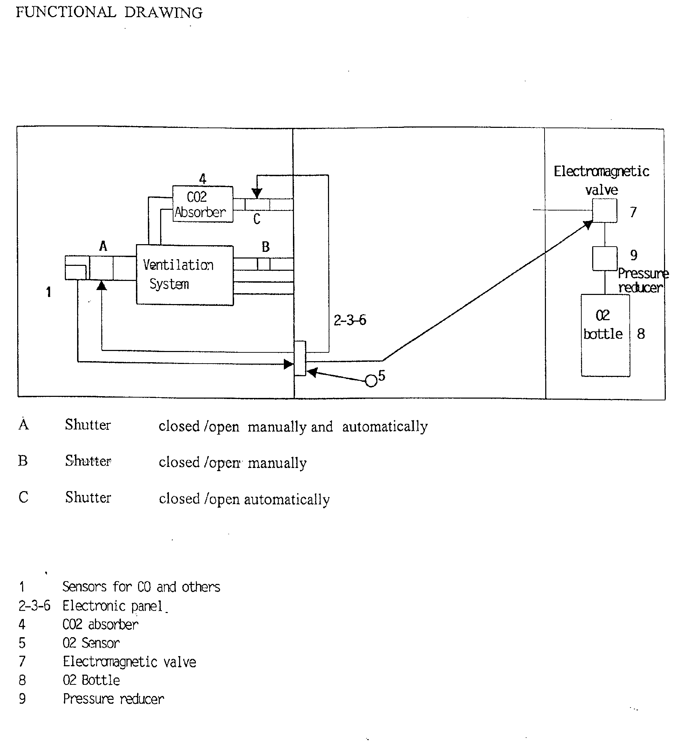

## Claims

1. The application of sensors of polluting agents in the motor vehicles in order to automatically control the start up of air recycling system in the driver's cabin.

2. The application into the ventilation system of motor vehicles of a CO2 absorber to absorb the CO2 produced by driver and passengers' breathing.

3. The application of a device for the maintenance of a programmable value for the concentration of oxygen into the driver's cabin.
